# EUROPÄISCHE PATENTSCHRIFT

(11) **EP 2 895 365 B1**
(45) Veröffentlichungstag und Bekanntmachung des Hinweises auf die Patenterteilung: **10.07.2019**
(21) Anmeldenummer: 13759733.2
(22) Anmeldetag: 09.09.2013
(51) Int. Cl.: B60T 15/20

(54) **DRUCKREGELVENTIL MIT INTEGRIERTER DRUCKAUSGLEICHSFUNKTION UND RÜCKSCHLAGVENTILFUNKTION**
PRESSURE CONTROL VALVE WITH PRESSURE EQUALIZING AND ONE-WAY VALVE FUNCTION
CLAPET DE REGLAGE DE PRESSURE
À ÉQUILIBRAGE DE PRESSION ET CLAPET ANTIRETOUR INTÉGRÉ

(30) Priorität: 12.09.2012 DE 102012108538
(43) Veröffentlichungstag der Anmeldung: 22.07.2015
(73) Patentinhaber: KNORR-BREMSE Systeme für Schienenfahrzeuge GmbH, 80809 München (DE)
(72) Erfinder: AMANN, Klaus, 85774 Unterföhring (DE); GARTEN, Thomas, 01896 Pulsnitz (DE)
(86) Internationale Anmeldenummer: PCT/EP2013/068554
(87) Internationale Veröffentlichungsnummer: WO 2014/040933

(56) Entgegenhaltungen:
- GB-A- 1 355 659
- US-A- 3 556 613
- US-A- 5 190 359
- US-A- 5 377 524

## Beschreibung

### GEBIET DER ERFINDUNG

Die vorliegende Erfindung betrifft ein pneumatisches Druckregelventil für ein Bremssteuerungssystem eines Schienenfahrzeugs, umfassend mindestens drei mit Druckluft beaufschlagte und in einem Gehäuse des Druckregelventils ausgebildete Druckräume, wobei ein erster von einem Kolben und einem an einem Ventilstößel angeordneten Ventilsitz abgedichteter Druckraum mit einen Bremsdruck beaufschlagt ist und fluidtechnisch über einen Kanal in dem Ventilstößel mit einem zweiten Druckraum zur Druckentlastung verbunden ist, wobei ferner zwischen den beiden Druckräumen ein dritter mit einem Versorgungsdruck beaufschlagter Druckraum angeordnet ist und die Abdichtung zwischen dem dritten Druckraum und dem zweiten Druckraum mittels einer im dritten Druckraum angeordneten Flachmembrane erfolgt, die eine axiale Bewegung des Ventilstößels ermöglicht. Ferner betrifft die Erfindung ein pneumatisches Steuerventil für Bremssteuerungssysteme für Schienenfahrzeuge umfassend ein solches pneumatisches Druckregelventil.

Das Einsatzgebiet der vorliegenden Erfindung ist der Schienenfahrzeugbau. Schienenfahrzeuge können mit einem pneumatischen Steuerventil ausgestattet sein, um eine Füllung von Vorratsluftbehältern zu steuern und in Abhängigkeit des Druckes in der Hauptluftleitung einen entsprechenden Bremszylinder- oder Vorsteuerdruck zu bilden. Ferner können in derartigen pneumatischen Steuerventilen pneumatische Druckregelventile als Höchstdruckbegrenzer oder Druckminderventile verwendet werden. Druckregelventile verhindern Überbremsungen und gleichen Luftverluste aufgrund von Undichtigkeiten aus. Der Höchstdruckbegrenzer begrenzt den Bremszylinderhöchstdruck unabhängig von anderen Einflussgrößen und das Druckregelventil realisiert, dass unabhängig vom Druck auf der Eingangsseite, ein bestimmter auf der Ausgangsseite herrschender Druck nicht überschritten wird.

### HINTERGRUND DER ERFINDUNG

Aus dem allgemein bekannten Stand der Technik geht hervor, dass pneumatische Druckregelventile als Höchstdruckbegrenzer oder Druckminderventile in pneumatische Steuerventile verwendet werden, wobei Höchstdruckbegrenzer im Vergleich zu Druckminderventile keine Sekundärdruckentlüftung aufweisen. Ferner ist bekannt, dass der Druckausgleich zwischen zwei Druckräumen mittels axialdynamischer Dichtelemente oder einer Membrane erfolgt. Es ist ebenfalls bekannt, dass eine Rückschlagventilfunktion mittels separater Elemente wie vorzugsweise Elastomerformteile realisierbar ist.

Aus der Druckschrift AT 326 727 B geht ein Druckregelventil für lastabhängige Bremskraftregler von Schienenfahrzeugbremsen hervor, das in Serie zur Fahrzeugfederung angeordnet ist und einen der Last des Fahrzeuges proportionalen Steuerdruck regelt. Das Druckregelventil besteht aus einer vom Fahrzeuggewicht bzw. einem Teilgewicht des Fahrzeuges belasteten, aus elastisch oder plastisch verformbaren Stoffen gebildete Druckmessplatte bzw. einer mit hydraulischen Mitteln gefüllten Druckmessdose und einem der Regelung des Steuerdruckes dienenden, ein Ein- und ein Auslassventil umfassenden Druckregelventil. Ferner umfasst das Druckregelventil ein das Druckregelventil betätigenden Membrankolben, der in Öffnungsrichtung des Auslassventilteils vom Steuerdruck belastet und außerdem über einen Stößel oder einen gegenüber dem Membrankolben kleinflächigen Differentialkolbenteil gegen die Druckmessplatte beziehungsweise gegen die Druckmessdose abgestützt ist. Das Druckregelventil weist für den Ein- und Auslassventilteil zwei konzentrische, mit federbelasteten, elastische Ventildichtungen zusammenwirkende Ventilsitze auf. Der innere Ventilsitz eines in einer Hülse verschieblich gelagerten Stößels ist an einem Ende gebildet. Der Stößel an seinem anderen Ende ist mit dem Membrankolben spielfrei gekuppelt. Die Elastizität des Werkstoffs der Ventildichtungen und die Kraft der Belastungsfeder dieser Ventildichtungen sind derart aufeinander abgestimmt, dass sich jeder Ventilsitz bei geschlossenem, belastetem und unter der Kraft der Ventilfeder stehenden Ventil um etwa 10 % des maximalen Hubweges des Stößels in die Ventildichtung eindrückt.

Darüber hinaus geht aus der Druckschrift DE 10 2011 087 511 A1 ein Druckregelventil umfassend einen Versorgungsanschluss, an dem ein Versorgungsdruck anliegt, einen Tankanschluss, an dem ein Tankdruck anliegt, und einen Arbeitsanschluss, an dem ein Arbeitsdruck anliegt. Der Arbeitsdruck wird mit dem Druckventil geregelt, das in zwei Teilventile unterteilt ist. Ein mechanisch durch einen Betätigungskolben betätigbarer Schließkolben unterbricht leckagefrei in einer Schließstellung eine Verbindung zwischen dem Versorgungsanschluss und dem Arbeitsanschluss.

Aus der Druckschrift US 5 190 359 A ist ein fernsteuerbares Druckablassventil für ein Notbremssystem bekannt, das seinen Steuerdruck über eine Öffnung mit kleinem Querschnitt aus der Hauptluftleitung bezieht. Durch Ablassen dieses Steuerdrucks über ein Vorsteuerventil wird eine im Druckablassventil angeordnete Membran einseitig druckentlastet und in Bewegung versetzt, so dass sie einen großen Querschnitt für die Entlüftung der Hauptluftleitung öffnet. Das Druckablassventil verfügt über eine Selbstreinigungsfunktion für die Öffnung, über die es den Steuerdruck bezieht.

### OFFENBARUNG DER ERFINDUNG

Es ist daher die Aufgabe der vorliegenden Erfindung ein pneumatisches Druckregelventil der gattungsgemäßen Art dahingehend zu verbessern, dass das pneumatische Druckregelventil sowohl eine integrierte Druckausgleichsfunktion als auch eine integrierte Rückschlagventilfunktion aufweist.
Die Aufgabe wird ausgehend von einem pneumatischen Druckregelventil gemäß dem Oberbegriff von Anspruch 1 in Verbindung mit dessen kennzeichnenden Merkmalen gelöst. Vorteilhafte Weiterbildungen der Erfindung gehen aus den nachfolgenden abhängigen Ansprüchen hervor.

Erfindungsgemäß weist die Flachmembrane einen im Wesentlichen mittig angeordneten kreisförmigen Durchbruch zur Realisierung einer Rückschlagfunktion auf, durch den sich in axialer Richtung der Ventilstößel erstreckt. Die Flachmembrane ist flexibel und erlaubt eine axiale Bewegung des Ventilstößels. Wenn der Druck im zweiten Druckraum größer ist als der Versorgungsdruck im dritten Druckraum, findet eine axiale Bewegung der Flachmembrane samt kreisförmigen Durchbruch entlang des Ventilstößels statt, so dass die Dichtwirkung der Flachmembrane aufgehoben wird und die Druckluft aus dem zweiten Druckraum in den dritten Druckraum strömt.

Vorzugsweise kommt die Flachmembrane axial an einer Stirnfläche eines mit dem Ventilstößel verbundenen zweiten Kolbens zur Anlage. An dieser Stirnfläche findet die Abdichtung statt. Ferner ist es vorteilhaft, abdichtende Flächen an mehreren Stellen des zweiten Kolbens auszubilden, um die Funktionssicherheit zu erhöhen.

Ebenfalls bevorzugt ist daher, dass die Flachmembrane an einer radialen Mantelfläche des Ventilstößels zur Anlage kommt. Dies stellt eine weitere Abdichtungsstelle dar.

Des Weiteren bevorzugt ist, dass der Ventilstößel an einem unmittelbar an den zweiten Kolben angrenzenden Abschnitt einen sich axial verändernden Längsschnitt aufweist. Aufgrund des variablen Durchmessers des Ventilstößels wird die Flachmembrane an ihrem kreisförmigen Durchbruch definiert aufgeweitet, so dass die Aufweitung von der axialen Position der Flachmembrane abhängig ist.

Gemäß einem bevorzugten Ausführungsbeispiel weist der Ventilstößel an einem unmittelbar an den zweiten Kolben angrenzenden Abschnitt einen in axial von dem zweiten Kolben wegzeigender Richtung sich konisch verjüngenden Längsschnitt auf. Dieser kegelförmige Abschnitt des Ventilstößels weist somit an einen dem zweiten Kolben nahe gelegenem Abschnitt einen größeren Durchmesser auf als ein vom zweiten Kolben axial entfernterer Abschnitt des Ventilstößels. Dadurch, dass der sich konisch verjüngende Längsschnitt in einen Abschnitt mit konstantem Durchmesser ausläuft, stellt der sich konisch verjüngende Längsschnitt einen Längsschnitt eines Kegelstumpfes dar.

Gemäß einem zweiten bevorzugten Ausführungsbeispiel weist der Ventilstößel an einem unmittelbar an den zweiten Kolben angrenzenden Abschnitt einen konkav verlaufenden Längsschnitt auf. Bei Reduzierung oder Wegnahme des Versorgungsdrucks kann die Flachmembrane trotz der Kolbenbewegung auf dem konkav verlaufenden Längsschnitt länger abdichten, sodass zwischen dem zweiten Druckraum und dem Versorgungsdruck solange eine höhere Druckdifferenz erhalten bleibt, bis ein bestimmter Grenzdruck erreicht ist bzw. bis eine Entlüftung stattfindet. Eine verzögerte Entlüftung des Bremsdrucks kann verwendet werden wenn der Bremsdruck als Parkbremsdruck fungiert und die Parkbremse erst gelöst sein darf, wenn ein Vorratsluftbehälter vollständig entlüftet ist. Außerdem kann der maximal eingestellte Bremsdruck erhalten bleiben, auch wenn der Versorgungsdruck aufgrund von Druckschwankungen abfallen sollte, da der Bremsdruck nicht sofort äquivalent reagiert.

Gemäß einem dritten bevorzugten Ausführungsbeispiel weist der Ventilstößel an einem unmittelbar an den zweiten Kolben angrenzenden Abschnitt einen konvex verlaufenden Längsschnitt auf. Bei Reduzierung des Versorgungsdrucks unterhalb des mit einem Federelement eingestellten Druckwertes kann die Flachmembrane auf dem konvex verlaufenden Längsschnitt sofort reagieren, sodass der Druck im zweiten Druckraum und der Bremsdruck den Wert des Versorgungsdrucks übernehmen. Somit lässt sich über den Versorgungsdruck unabhängig vom eingestellten Maximalwert des Bremsdrucks der maximale Bremsdruck pneumatisch reduzieren. Außerdem ist bei einer Entlüftung des Versorgungsdrucks ein sofortiges Entlüften des Bremsdrucks ohne Verzögerung möglich.

Gemäß einer die Erfindung weiter verbessernden Maßnahme wird vorgeschlagen, dass die Flachmembrane aus einem kältebeständigen Elastomerwerkstoff hergestellt ist. Vorzugsweise ist der kältebeständige Elastomerwerkstoff ein Nitril-Butadien-Kautschuk. Der Vorteil besteht insbesondere darin, dass die Flachmembrane aufgrund der Anschmiegbarkeit und Elastizität des kältebeständigen Elastomerwerkstoffs unter jeglichen Bedingungen die Dicht- und Rückschlagfunktion sicher gewährt.

Es wird weiterhin vorgeschlagen, dass ein pneumatisches Steuerventil für Bremssteuerungssysteme für Schienenfahrzeuge das pneumatische Druckregelventil umfasst. Somit ist eine Unabhängigkeit des Bremsdruckes von einem Speise- bzw. Versorgungsdruck realisierbar, wobei durch das pneumatische Druckregelventil eine integrierte Rückschlagfunktion des pneumatischen Steuerventils erfolgt.

### KURZE BESCHREIBUNG DER ZEICHNUNGEN

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigen:
- Fig.1: ein vereinfachtes Blockdiagramm eines Bremssteuerungssystems für Schienenfahrzeuge, umfassend eines erfindungsgemäßen pneumatischen Steuerventils mit einem erfindungsgemäßen pneumatischen Druckregelventil,
- Fig.2: ein schematischer Längsschnitt des erfindungsgemäßen pneumatischen Druckregelventils aus Fig. 1 mit einem Ventilstößel, der teilweise einen sich konisch verjüngenden Längsschnitt aufweist,
- Fig.3: ein zweites Ausführungsbeispiel des erfindungsgemäßen pneumatischen Druckregelventils mit einem Ventilstößel, der teilweise einen konvex verlaufenden Längsschnitt aufweist, und
- Fig.4: ein drittes Ausführungsbeispiel des erfindungsgemäßen pneumatischen Druckregelventils mit einem Ventilstößel, der teilweise einen konkav verlaufenden Längsschnitt aufweist.

### DETAILLIERTE BESCHREIBUNG EINER BEVORZUGTEN AUSFÜHRUNGSFORM

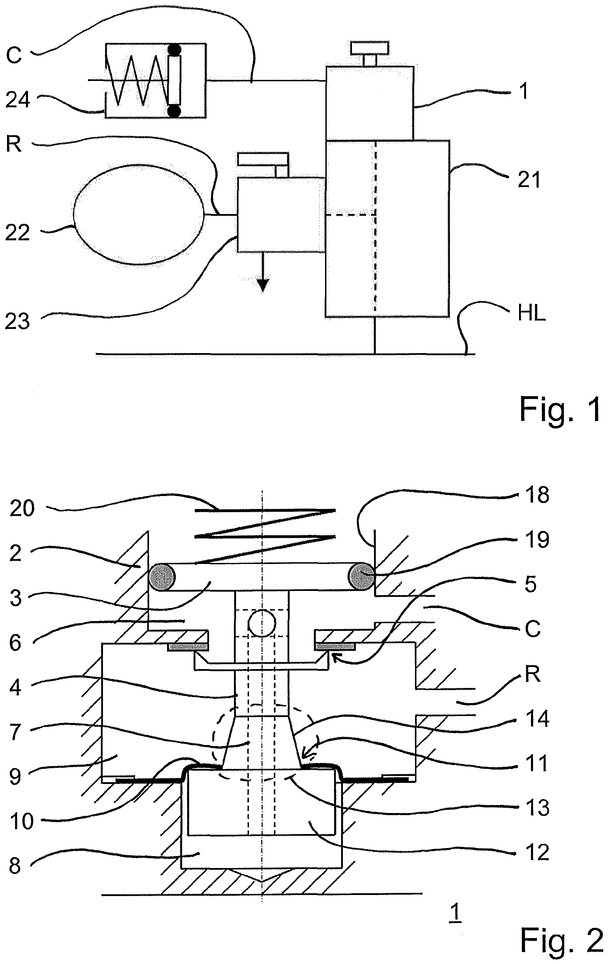

Figur 1 zeigt ein vereinfachtes Blockdiagramm eines Bremssteuerungssystems für Schienenfahrzeuge. An einer sich durch den gesamten Zug erstreckenden Hauptluftleitung HL ist ein Steuerventil 21 angeordnet. An dem Steuerventil 21 ist ein Vorratsluftbehälter 22 angeordnet, der einen in das Steuerventil 21 mündenden Versorgungsdruck R generiert und mit einem Hahn 23 entlüftet werden kann. Das Steuerventil 21 steuert die Füllung des Vorratsluftbehälters 22. Im Steuerventil 21 integriert befindet sich ein pneumatisches Druckregelventil 1. Der Bremsdruck C mündet in einen Bremszylinder 24, der den Druck in eine Kraft für eine - hier nicht dargestellte - Reibungsbremse umwandelt. Das pneumatische Druckregelventil 1 dient zur Druckbegrenzung für den unter den Bremsdruck C stehenden Bremszylinder 24. Wenn der Hahn 23 geöffnet und der Vorratsluftbehälter 22 somit entlüftet wird, wird ebenso auch die Bremsdruckleitung C über die Rückschlagventilfunktion im pneumatischen Druckregelventil 1 entlüftet.

Gemäß Figur 2 umfasst das pneumatische Druckregelventil 1 drei mit Druckluft beaufschlagte und in einem Gehäuse 2 des Druckregelventils 1 ausgebildete Druckräume. Ein erster von einem Kolben 3 und einen an einem Ventilstößel 4 angeordneten Ventilsitz 5 abgedichteter Druckraum 6 ist mit einen Bremsdruck C beaufschlagt.

Der Kolben 3 ist in einem im Gehäuse 2 ausgebildeten Zylinder 18 axial auf und ab bewegbar und weist an einer Außenumfangsfläche ein Dichtungselement 19 auf. Das Dichtungselement dichtet einen oberen Volumenraum des Zylinders 18 von einem unteren Volumenraum des Zylinders 18 ab. In dem oberen Volumenraum ist axial auf einer Stirnfläche des Kolbens 3 ein Federelement 20 angeordnet, welches vorgespannt ist und mit einer Federkraft auf den Kolben und des damit verbundenen Ventilstößels einwirkt.

Über einen längs des Ventilstößels 4 verlaufenden Kanal 7 im Ventilstößel 4 ist ein zweiter Druckraum 8 zur Druckentlastung mit dem ersten Druckraum 6 verbunden. Zwischen den beiden Druckräumen 6 und 8 ist ein dritter mit einem Versorgungsdruck R beaufschlagter Druckraum 9 angeordnet. Die Abdichtung zwischen dem dritten Druckraum 9 und dem zweiten Druckraum 8 erfolgt mittels einer im dritten Druckraum 9 angeordneten Flachmembrane 10, die eine axiale Bewegung des Ventilstößels 4 ermöglicht. Die Flachmembrane 10 weist einen mittig angeordneten kreisförmigen Durchbruch 11 zur Realisierung einer Rückschlagfunktion auf, durch den sich in axialer Richtung der Ventilstößel 4 erstreckt. Die Flachmembrane 10 kommt axial an einer Stirnfläche eines mit dem Ventilstößel 4 verbundenen zweiten Kolbens 12 zur Anlage.

Wenn der Druck im zweiten Druckraum 8 größer ist als der Versorgungsdruck R im dritten Druckraum 9, bewegt sich der kreisförmige Durchbruch 11 in der Flachmembrane 10 aus dem sich konisch verjüngenden Längsschnitt 14 heraus, so dass die Dichtwirkung der Flachmembrane 10 verloren geht und die Druckluft entlang des sich konisch verjüngenden Längsschnitt 14 aus dem zweiten Druckraum 8 in den dritten Druckraum 9 strömt. Aufgrund des Kanals 7 sinkt der Druck im ersten Druckraum 6 ebenfalls ab, wodurch eine Störung des Kräftegleichgewichts am Kolben 3 ausgelöst wird. Daher öffnet der Ventilsitz 5 und entlüftet somit sukzessive den dritten Druckraum 9.

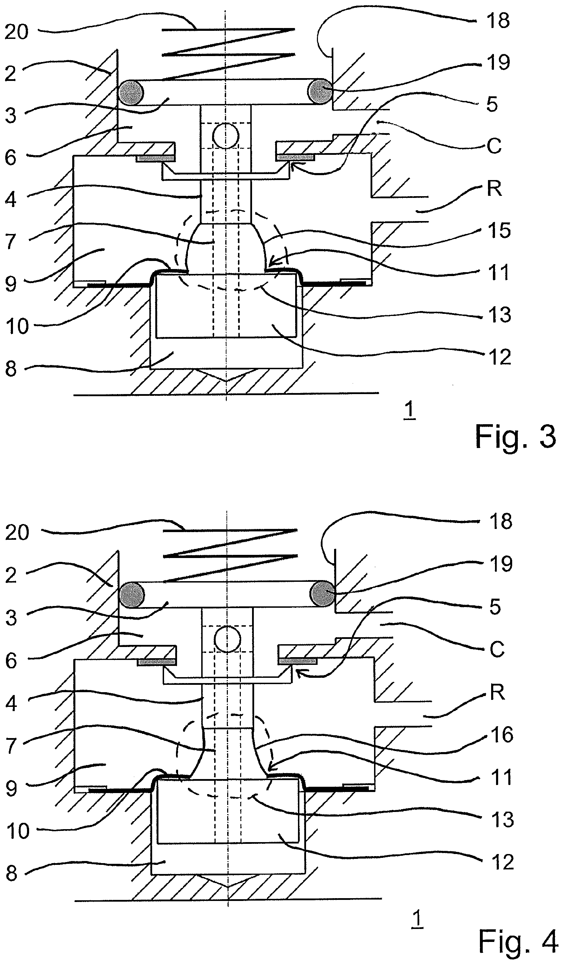

Figur 3 zeigt ein weiteres Ausführungsbeispiel des pneumatischen Druckregelventils 1 aus Figur 2, wobei hier der Ventilstößel 4 einen teilweise konvex verlaufenden Längsschnitt 16 aufweist. Bei Reduzierung des Versorgungsdrucks R unterhalb des mit dem Federelement 20 eingestellten Druckwertes kann die Flachmembrane 10 auf dem konvex verlaufenden Längsschnitt 16 sofort reagieren, sodass der Druck im zweiten Druckraum 8 und der Bremsdruck C den Wert des Versorgungsdrucks R übernehmen.

Figur 4 zeigt ein weiteres Ausführungsbeispiel des pneumatischen Druckregelventils 1 aus Figur 2, wobei in diesem Fall der Ventilstößel 4 einen teilweise konkav verlaufenden Längsschnitt 15 aufweist. Bei Reduzierung oder Entfall des Versorgungsdrucks R kann die Flachmembrane 10 trotz der Kolbenbewegung auf dem konkav verlaufenden Längsschnitt 15 länger abdichten, sodass zwischen dem zweiten Druckraum 8 und dem Versorgungsdruck R solange eine höhere Druckdifferenz erhalten bleibt, bis ab einem bestimmten Grenzdruck ein Druckausgleich oder eine Entlüftung stattfindet.

Es ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste

- 1: pneumatisches Druckregelventil
- 2: Gehäuse
- 3: Kolben
- 4: Ventil stößel
- 5: Ventilsitz
- 6: erster Druckraum
- 7: Kanal
- 8: zweiter Druckraum
- 9: dritter Druckraum
- 10: Flachmembrane
- 11: kreisförmiger Durchbruch
- 12: zweiter Kolben
- 13: Abschnitt
- 14: konisch verjüngender Längsschnitt
- 15: konkav verlaufender Längsschnitt
- 16: konvex verlaufender Längsschnitt
- 17: pneumatisches Steuerventil
- 18: Zylinder
- 19: Dichtungselement
- 20: Federelement
- 21: Steuerventil
- 22: Vorratsluftbehälter
- 23: Hahn
- 24: Bremszylinder

- C: Bremsdruck
- HL: Hauptluftleitung
- R: Versorgungsdruck

## Patentansprüche

1. Pneumatisches Druckregelventil (1) für ein Bremssteuerungssystem eines Schienenfahrzeugs, umfassend mindestens drei mit Druckluft beaufschlagte und in einem Gehäuse (2) des Druckregelventils (1) ausgebildete Druckräume, wobei ein erster von einem Kolben (3) und einem an einem Ventil stößel (4) angeordneten Ventilsitz (5) abgedichteter Druckraum (6) mit einen Bremsdruck (C) beaufschlagt ist und fluidtechnisch über einen Kanal (7) in dem Ventilstößel (4) mit einem zweiten Druckraum (8) zur Druckentlastung verbunden ist, wobei ferner zwischen den beiden Druckräumen (6, 8) ein dritter mit einem Versorgungsdruck (R) beaufschlagter Druckraum (9) angeordnet ist und die Abdichtung zwischen dem dritten Druckraum (9) und dem zweiten Druckraum (8) mittels einer im dritten Druckraum (9) angeordneten Flachmembrane (10) erfolgt, die eine axiale Bewegung des Ventilstößels (4) ermöglicht,
**dadurch gekennzeichnet, dass** die Flachmembrane (10) einen im Wesentlichen mittig angeordneten kreisförmigen Durchbruch (11) zur Realisierung einer Rückschlagfunktion aufweist, durch den sich in axialer Richtung der Ventilstößel (4) erstreckt.

2. Druckregelventil (1) nach Anspruch 1,
**dadurch gekennzeichnet, dass** die Flachmembrane (10) axial an einer Stirnfläche eines mit dem Ventilstößel (4) verbundenen zweiten Kolbens (12) zur Anlage kommt.

3. Druckregelventil (1) nach Anspruch 1,
**dadurch gekennzeichnet, dass** die Flachmembrane (10) an einer radialen Mantelfläche des Ventilstößels (4) zur Anlage kommt.

4. Druckregelventil (1) nach Anspruch 1,
**dadurch gekennzeichnet, dass** der Ventilstößel (4) an einem unmittelbar an den zweiten Kolben (12) angrenzenden Abschnitt (13) einen sich axial verändernden Längsschnitt aufweist.

5. Druckregelventil (1) nach Anspruch 4,
**dadurch gekennzeichnet, dass** der Ventilstößel (4) an einem unmittelbar an den zweiten Kolben (12) angrenzenden Abschnitt (13) einen in axial von dem zweiten Kolben (12) wegzeigender Richtung sich konisch verjüngenden Längsschnitt (14) aufweist.

6. Druckregelventil (1) nach Anspruch 4,
**dadurch gekennzeichnet, dass** der Ventilstößel (4) an einem unmittelbar an den zweiten Kolben (12) angrenzenden Abschnitt (13) einen konkav verlaufenden Längsschnitt (15) aufweist.

7. Druckregelventil (1) nach Anspruch 4,
**dadurch gekennzeichnet, dass** der Ventilstößel (4) an einem unmittelbar an den zweiten Kolben (12) angrenzenden Abschnitt (13) einen konvex verlaufenden Längsschnitt (16) aufweist.

8. Druckregelventil (1) nach Anspruch 1,
**dadurch gekennzeichnet, dass** die Flachmembrane (10) aus einem kältebeständigen Elastomerwerkstoff hergestellt ist.

9. Pneumatisches Steuerventil (17) für Bremssteuerungssysteme für Schienenfahrzeuge umfassend ein pneumatisches Druckregelventil (1) nach einem der vorhergehenden Ansprüche.

## Claims

1. A pneumatic pressure-regulating valve (1) for a brake control system of a rail vehicle, comprising at least three pressure chambers admitting compressed air and formed in a housing (2) of the pressure-regulating valve (1), wherein a first pressure chamber (6), sealed off by a piston (3) and a valve seat (5) arranged on a valve tappet (4), has a brake pressure (C) admitted to it and has a fluid connection by way of a passage (7) in the valve tappet (4) to a second pressure chamber (8) in order to relieve pressure, wherein a third pressure chamber (9) to which a supply pressure (R) is admitted is furthermore arranged between the two pressure chambers (6, 8) and the sealing between the third pressure chamber (9) and the second pressure chamber (8) is provided by means of a flat diaphragm (10), which is arranged in the third pressure chamber (9) and which allows an axial movement of the valve tappet (4), **characterized in that** the flat diaphragm (10) comprises a substantially centrally arranged circular opening (11) for achieving a check function, through which the valve tappet (4) extends in an axial direction.

2. The pressure-regulating valve (1) as claimed in claim 1, **characterized in that** the flat diaphragm (10) bears axially on an end face of a second piston (12) connected to the valve tappet (4).

3. The pressure-regulating valve (1) as claimed in claim 1, **characterized in that** the flat diaphragm (10) bears on a radial circumferential surface of the valve tappet (4).

4. The pressure-regulating valve (1) as claimed in claim 1, **characterized in that** the valve tappet (4) comprises an axially varying longitudinal section on a portion (13) immediately adjoining the second piston (12) .

5. The pressure-regulating valve (1) as claimed in claim 4, **characterized in that** the valve tappet (4) comprises a longitudinal section (14), conically tapering in a direction pointing axially away from the second piston (12), on a portion (13) immediately adjoining the second piston (12).

6. The pressure-regulating valve (1) as claimed in claim 4, **characterized in that** the valve tappet (4) comprises a longitudinal section (15) having a concave profile on a portion (13) immediately adjoining the second piston (12).

7. The pressure-regulating valve (1) as claimed in claim 4, **characterized in that** the valve tappet (4) comprises a longitudinal section (16) having a convex profile on a portion (13) immediately adjoining the second piston (12).

8. The pressure-regulating valve (1) as claimed in claim 1, **characterized in that** the flat diaphragm (10) is produced from a cold-resistant elastomer material.

9. A pneumatic control valve (17) for brake control systems for rail vehicles comprises a pneumatic pressure-regulating valve (1) as claimed in one of the preceding claims.

## Revendications

1. Soupape (1) pneumatique de régulation de la pression pour un système de commande de frein d'un véhicule ferroviaire, comprenant au moins trois espaces de pression alimentés en air comprimé et constitués dans un boîtier (2) de la soupape (1) de régulation de la pression, dans laquelle un premier espace (6) de pression, rendu étanche par un piston (3) et par un siège (5) de soupape monté sur un poussoir (4) de soupape, est alimenté en une pression (C) de freinage et, pour la décompression, communique fluidiquement, par un canal (7) du poussoir (4) de soupape, avec un deuxième espace (8) de pression, dans laquelle, en outre, un troisième espace (9) de pression, alimenté en une pression (R) d'alimentation, est disposé entre les deux espaces (6, 8) de pression et l'étanchéité entre le troisième espace (9) de pression et le deuxième espace (8) de pression s'effectue au moyen d'une membrane (10) plate, qui est montée dans le troisième espace (9) de pression et qui permet un déplacement axial du poussoir (4) de la soupape,
**caractérisée en ce que** la membrane (10), plate a, pour la réalisation d'une fonction de clapet antiretour, une ouverture (11) circulaire, sensiblement au milieu, dans laquelle le poussoir (4) de la soupape s'étend dans la direction axiale.

2. Soupape (1) de régulation de la pression suivant la revendication 1,
**caractérisée en ce que** la membrane (10) plate vient en contact axialement avec une surface frontale d'un deuxième piston (12) relié au poussoir (4) de la soupape.

3. Soupape (1) de régulation de la pression suivant la revendication 1,
**caractérisée en ce que** la membrane (10) plate vient en contact sur une surface latérale radiale du poussoir (4) de la soupape.

4. Soupape (1) de régulation de la pression suivant la revendication 1,
**caractérisée en ce que** le poussoir (4) de la soupape a une section longitudinale, qui se modifie axialement sur une partie (13) voisine directement du deuxième piston (12).

5. Soupape (1) de régulation de la pression suivant la revendication 4,
**caractérisée en ce que** le poussoir (4) de la soupape a, sur une partie (13) voisine directement du deuxième piston (12), une section (14) longitudinale se rétrécissant coniquement dans une direction s'éloignant axialement du deuxième piston (12) .

6. Soupape (1) de régulation de la pression suivant la revendication 4,
**caractérisée en ce que** le piston (4) de la soupape a une section (15) longitudinale concave sur une partie (13) voisine directement du deuxième piston (12).

7. Soupape (1) de régulation de la pression suivant la revendication 4,
**caractérisée en ce que** le piston (4) de la soupape a une section (16) convexe sur une partie (13) voisine directement du deuxième piston (12).

8. Soupape (1) de régulation de la pression suivant la revendication 1,
**caractérisée en ce que** la membrane (10) plate est en un matériau élastomère résistant au froid.

9. Soupape (17) pneumatique de commande de système de commande de frein de véhicule ferroviaire, comprenant une soupape (1) de pneumatique de régulation de la pression suivant l'une des revendications précédentes.
